# EUROPEAN PATENT SPECIFICATION

(11) **EP 3 889 548 B1**
(45) Date of publication and mention of the grant of the patent: **26.02.2025**
(21) Application number: 21166253.1
(22) Date of filing: 31.03.2021
(51) Int. Cl.: G01D 5/244, G01D 5/245

(54) **A ROTATING MEMBER ASSEMBLY**
DREHELEMENT-BAUGRUPPE
ENSEMBLE ÉLÉMENT ROTATIF

(30) Priority: 31.03.2020 IN 202041014483
(43) Date of publication of application: 06.10.2021
(73) Proprietor: TVS Motor Company Limited, Chennai 600006 (IN)
(72) Inventor: KUMAR CHIRRY, Varun, 600006 Chennai (IN); PRAKASAM SURESH, Thatavarthi, 600006 Chennai (IN); RAJARAM SAGARE, Datta, 600006 Chennai (IN)
(74) Representative: Patentanwaltskanzlei Matschnig & Forsthuber OG

(56) References cited:
- US-A- 5 264 792
- US-A1- 2008 210 021
- US-A1- 2013 335 067

## Description

### TECHNICAL FIELD

The present subject matter relates to a rotation member assembly, and more particularly the present subject matter relates to a low-cost and improved rotation member assembly.

### BACKGROUND

Generally, most systems, irrespective of technical domain, utilize various rotating members, which act as a primary functional member, or as secondary functional members. Considering, an automotive domain, the primary functional member can be a crankshaft, a motor shaft etc. and the secondary functional member can be a cooling fan, or a gear shaft etc. In aforementioned and all other systems incorporating the rotating members, the rotating members play a vital role in operating the system. For example, in case of a crankshaft of a power unit, the crankshaft is connected to a reciprocating piston. A to and fro motion of the reciprocating piston is converted into a rotational motion of the crankshaft. The power unit may be a four-cycle engine and a position of the piston can be identified by an angular position of a crankshaft. Such information can be a used for actuating a spark in a combustion chamber of the power unit, which is typically performed at end of a compression stroke. Many such information is used in effective of the power unit and various other systems. Typically, an angular detection system is used to obtain such information related to the rotating members.

US 2008/0210021 A1 discloses a method and system for making available a phase signal of a phase sensor on a camshaft of an internal combustion engine immediately after switching ON the phase sensor. It includes a signal-generating wheel of the crankshaft and a second signal-generating wheel, which is also connected to the camshaft of the internal combustion engine, having circumference segments of different lengths. The signal-generating wheel of the crankshaft is recorded by a crankshaft sensor, and the signal-generating wheel of the camshaft by a phase sensor. US 5,264,792 discloses a Hall effect position sensor.

### BRIEF DESCRIPTION OF THE DRAWINGS

The scope of the present invention is defined by claim 1.

The detailed description of the present subject matter is described with reference to an embodiment of a two wheeled saddle type step thru vehicle along with the accompanying figures. Similar reference signs are used throughout the figures to reference like features and functional components.
Fig. 1 (a) illustrates a pulse output of a sensor member for an exemplary rotation detection system known in the art.
Fig. 1 (b) an enlarged view a pulse output of a sensor member for a rotation detection system known in the art.
Fig. 2 illustrates an axial view of a rotation member assembly, in accordance with an embodiment of the present subject matter.
Fig. 3 illustrates a perspective view of a rotation member assembly, in accordance with an embodiment of the present subject matter.
Fig. 4 illustrates an enlarged view of a rotation member assembly, in accordance with an embodiment of the present subject matter.
Fig. 5 illustrates a schematic view enlarged view of a rotation member assembly, in accordance with an embodiment of the present subject matter.
Fig. 6 illustrates a schematic view of rotation detection system, in accordance with an embodiment of the present subject matter.
Fig. 7 illustrates an enlarged view of a pulse output of a sensor member, in accordance with an embodiment of the present subject matter.

### DETAILED DESCRIPTION

Generally, a rotating member in a system are characterized by other specific metrics in addition to angular change, which is generally referred to as crank angle. For example, the rotating member may have an additional metric termed as a rate of angular change, a crankshaft of a power unit, in addition to angular change, experiences a rate of angular change which has to communicated to a control system. Basing on such information related to the rotating member, the control system alters an ignition timing and fuel injection pulses for optimum performance of the system. Based on these inputs, ECU actuates fuel pump, fuel injector and ignition coil. Further, even during starting operation of the power unit, the start condition of the power unit or the system retards or advances an ignition are controlled based on such information. The system that takes control of starting, ignition, fuel injection etc. requires precise information for their effective & efficient operation.

To understand criticality of the detection system and the short comings therein, a typical motor vehicle with a power unit is considered as example. An electrical machine like a magneto is mounted to the crankshaft of the power unit. The electrical machine comprises a stator and a rotor. The stator is fixedly mounted to the power unit and the rotating member is connected to the crankshaft. The rotor, which has predetermined surface area, is utilized for providing position members thereon. A sensor member is provided on the power unit to detect the position member thereby detecting the crank angle, rate of change of crank angle etc. Based on such angular information, a control unit controls fuel injection, ignition coil for performing combustion of fuel by taking inputs from various sensors including a throttle position sensor, engine speed sensor, engine temperature sensor, intake air temperature sensor and many other sensor inputs.

In the power unit, air is sucked into the combustion chamber and it is mixed with fuel sprayed by the fuel injector or supplied by a carburetor. The air-fuel mixture is ignited by spark produced by spark plug. The burnt gases are scavenged out through an exhaust system. The control unit detects oxygen concentration from the burnt gases and provides a feedback to the control unit for calibrating fuel injection or fuel supply from an EFI or an electronic carburetor. Moreover, fuel injection has to inject fuel at a certain time and should inject fuel for certain duration. The control unit provides timing signals required for injection are derived from the position members and sensor members.

Typically, the position members are provided at regular intervals spacedly (angular) on the rotating member of the electric machine and a pre-determined air gap is maintained between the position members and the sensors members. In a popular implementation, the position members are multiple protrusion that are formed on outer periphery of the rotating member with a pre-determined angular gap between every two adjacently disposed position members. The rotating member is also provided with a missing position member. When the position member passes by the sensor member, the sensor member generates a signal and when a missing pulse passes by the sensor member a different pulse or no pulse is generated. For example, the position member detects a variation in reluctance due to reduction in air gap between the sensor member and the rotating member thereby causing a change in voltage across the sensor member. The voltage induced across the sensor member provides information related to crank angle and rate of angular change of the rotor. The signal from the sensor member is conditioned and a speed (rotational) related data is calculated by a control unit. A threshold voltage unit which is kept constant and the conditioned voltage is compared with the threshold voltage. If the voltage signal value exceeds the threshold, it is considered as a positive peak. Using this input, pulses are generated and with this output, piston position and engine speed are calculated. Injection and ignition are performed based on piston position.

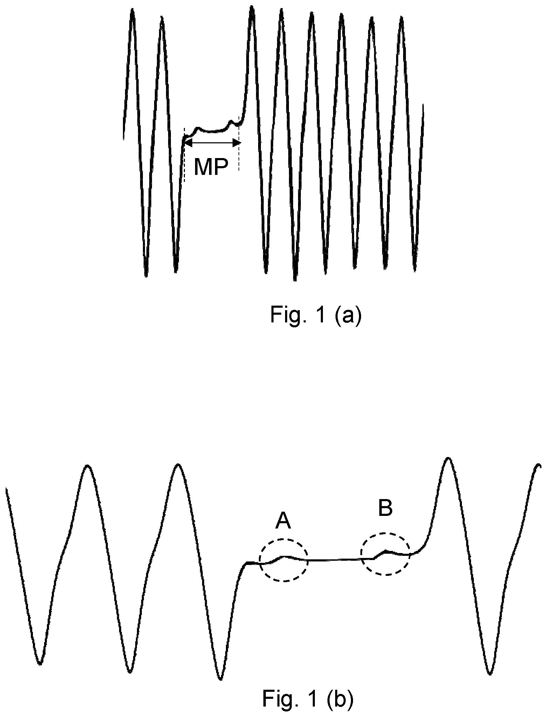

Generally, there would be certain variations in surface finish of the outer surface of the rotor. The variations in surface finish would reduce the gap between the sensor member and the rotating member thereby inducing a voltage thereacross. This undesired voltage that is generated is considered as noise, which may provide faulty information to the control unit. Moreover, if a stray capacitance of the control unit is higher, the induced noise voltage will be further amplified. When the rotating member is operating at higher speeds, the noise voltage may even exceed the threshold voltage resulting in false positive peak detection. Fig. 1 (a) illustrates a pulse output of a sensor member for an exemplary rotation detection system known in the art. As can be seen in Fig. 1 (a), the output of the sensor member is pulses as it detects the position members and a missing member region MP is also shown. When the missing member region MP passes by the sensor member a flat curve is supposed to be generated. However, due to some undulations or due to improper finish of the sensor member, there are certain spikes in the region MP. Fig. 1 (b) illustrates an enlarged view of a pulse output of a sensor member for a rotation detection system known in the art. As can be seen at region A and at region B, the voltage of the sensor member may exceed a threshold voltage because of which the control unit will not be able to detect the correct crank angle. Thus, the control unit would not able to identify the position of the piston or identify crank angle, which results in incorrect piston position calculation. Accordingly, triggering of ignition and fuel injection are performed at incorrect piston positions which is undesirable. This results in synchronization loss in the power unit and fuel injection & spark ignition are performed during all cycles or during inappropriate cycles, which results in drop in power thereby dropping vehicle speed and even sudden jerk is experienced by the user, which is undesirable. Such power drop or jerk becomes catastrophic during hill climb or during over taking condition. Even though such error can be reset by performing a power cut-off/ ignition off and restarting the power unit, such a condition cannot be performed when the vehicle is in motion. Moreover, the user of the vehicle would not able to identify such underlying error condition. Typical solutions in the art to bypass such error would be to increase the threshold voltage. But, increasing the engine threshold voltage would affect the startability of the power unit, especially during kick-start, as voltage induced across sensor member during such conditions is less whereby the induced voltage would not cross the threshold voltage. In the art, a digital system may be used, which provides option to vary the threshold voltage. Such digital systems are expensive due to customization they offer, and the threshold voltage may have to be varied for different operating conditions of the power unit making it a complex system. Moreover, the digital system has to be tuned for every rotating member configuration as the manufacturing variation would differ from rotating member to rotating member thereby making it a cumbersome process. In addition to the aforementioned shortcomings, migrating to such digital systems makes the system expensive adding to cost of the overall system. Thus, there is a need for providing an improved solution that is capable of addressing the aforementioned and other problems in the art & is also economical at the same time.

Thus, the present subject matter provides a rotation member assembly a rotating member and a corresponding sensor member to detect and provide information related to rotation of the rotating member. The rotating member comprises plurality of position members provided on a peripheral surface thereof. The peripheral surface is an outer peripheral surface when a corresponding stator is inside and the peripheral surface is an inner peripheral surface when the stator is outside. The rotating member is also provided with a missing member region on the peripheral surface. The rotating member assembly is configured with a ratio of a first air gap between the peripheral surface of the rotating member and the sensor member to a second air gap between the positioning member and the sensor member which is of a predetermined range of 3 to 6.

Hereinafter, the aforementioned ratio of first air gap to second air gap may be referred to as `air gap ratio' and the air gap ratio in the range of 3 to 6 enables detection of the position member and reduces/ eliminates erroneous detection or generation of output by sensor member with reference to any undulations. Thus, the present subject matter eliminates the need for having high precision surface finish for rotating member as the air gap ratio is configured to avoid erroneous detection of any undulations on the peripheral surface as a positioning member. The present subject enables use of existing configuration of the sensor member without the need for introducing a new sensor member. Further, even with a stray capacitance of the control unit, any voltage detected from the undulations will not be considered as detection of a positioning member due to the configured air gap ratio.

In one embodiment, the plurality of position members protrudes outward having a height, which is being at least 1.5 times of an earlier height of position member. The term `earlier height' refers to a height of the position member earlier to the current configuration or in the prior art. Thus, the rotating member can retain existing radius (till outer peripheral surface) with only minor change in height thereby making it a low-cost solution. Moreover, retaining the majority of volume of the rotating member as it is makes it implementable or retrofit worthy on existing systems.

In one embodiment, the second air gap is in the range of 0.6 to 1 millimetre thereby maintaining the position member relatively closer to the sensor member for effecting a reluctance change.

In one embodiment, the first air gap is in the range of 1.8 to 6 millimetre thereby maintaining a safe distance between the outer peripheral surface and the sensor member to avoid false detection of any undulation that may be formed during manufacturing or due to wear and tear.

In one embodiment, the rotating member in conjunction with a stator forms an electrical machine that is capable of performing at least one of a motoring or a generation function making it one of critical systems.

In one embodiment, the rotating member is connected to a crankshaft of a power unit. Rotation related information, which is a critical part of a power unit that in turn gets connected to a piston, is obtained from the rotating member.

Any undulation that are formed on the outer peripheral surface of the rotating member due to wear also do not influence in generation of a false output of the sensor member. Thus, the rotating member assembly acts as a reliable system even after prolonged usage.

The present subject matter does not require varying a threshold voltage for various operating condition thereof. A lower threshold voltage can be maintained to identify all operating conditions with no false detections.

The present subject matter offers a cost-effective solution as need for a threshold voltage variation circuit (that enables modification of voltage), which is expensive, is eliminated.

The rotating member assembly is mounted to a motor vehicle for providing rotational related information of one or more systems of the motor vehicle.

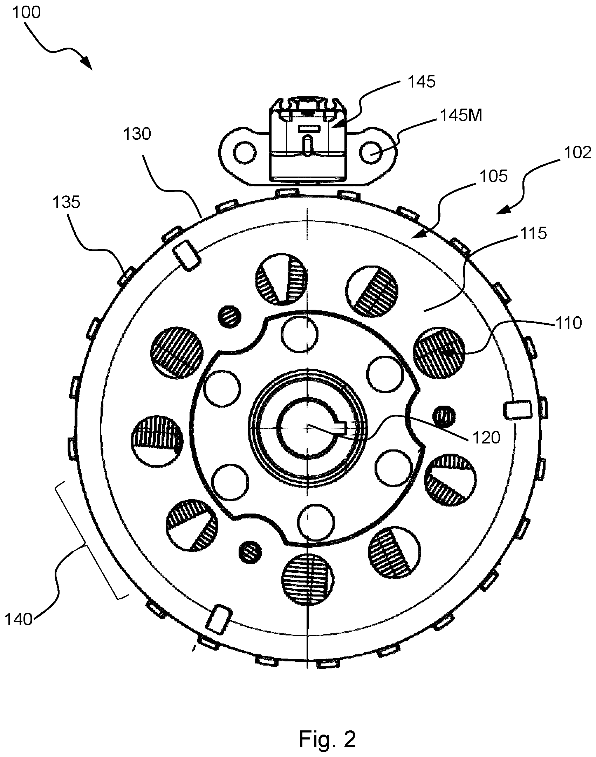

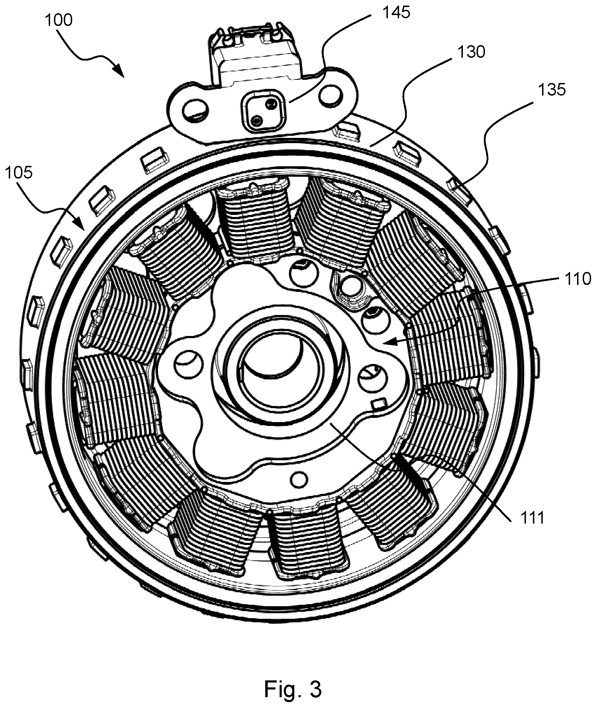

Fig. 2 illustrates an axial view of a rotation member assembly, in accordance with an embodiment of the present subject matter. Fig. 3 illustrates a perspective view of a rotation member assembly, in accordance with an embodiment of the present subject matter. The rotation member assembly 100 comprises an electrical machine 102 that comprises of a rotating member assembly 105 and a stator 110. The stator 110 comprises a core portion 111, which acts as a frame for securing the stator 110 to a structural member. For example, the structural member can be a crankcase of an IC engine/ power unit or a casing for that particular system. The electrical machine here is magneto comprising the rotating member 105. In one implementation, the electrical machine 102 may be used in an internal combustion (IC) engine (not shown) for power generation. The stator 110 gets secured to a structural member of the IC engine. The rotating member 105 is fixedly mounted to a rotating member of the IC engine. In one implementation, the rotating member is secured to a crankshaft of the IC engine and thus, the crankshaft and the rotating member act as a single rotating system. The rotating member 105, in the depicted embodiment, is a cylindrical member having an open axial side and closed axial side 115. The closed axial side 115 is configured with an aperture 120 to secure the crankshaft thereto.

The stator 110 comprises plurality of teeth and windings wound to the plurality of teeth. The rotating member 105 comprises plurality of magnets (not seen in the Figure) provided on an inner periphery (of the cylindrical member), in the depicted implementation, in order to induce voltage/ current in the windings thereby generating power. The rotating member 105 comprises a peripheral surface 130 and the peripheral surface 130 is configured with plurality of position members 135. In the depicted implementation, the position members 135 are spaced apart by 15 degrees and include a missing member region 140 that are formed on an outer peripheral surface, also referred by '130'. In the current embodiment, two position members are missing to form the missing member region. A sensor member 145 is disposed adjacent to the rotating member with a pre-determined air-gap with the position member 135. The missing position member 145 acts a reference for identifying the crank angle and the position of the piston in a combustion chamber. The plurality of position members 135 enables in calculation of the rate of change of rotational speed of the rotating member 105 or the rotating member.

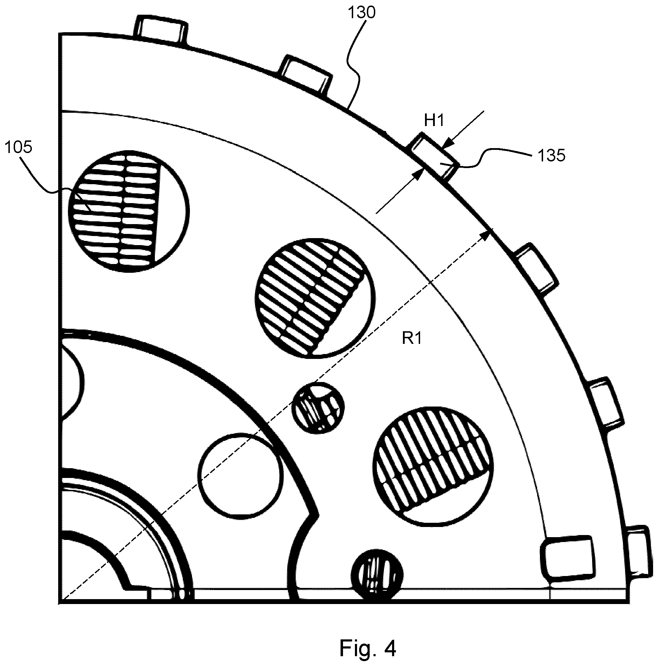

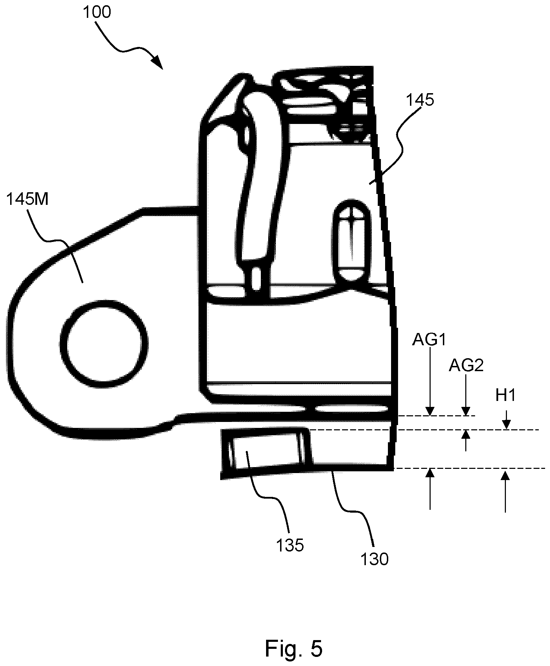

Fig. 4 illustrates an enlarged view of a rotation member assembly, in accordance with an embodiment of the present subject matter. The position member 135 is configured with a height H1, which is at least about 1.5 times of an existing height/earlier height 'x' of the position member. A radius R1 of the rotor, which is taken from a centre of the rotating member 105, to the outer peripheral surface 130 is retained without the need for any modification of the stator 110 and the corresponding magnets configuration. For example, in one embodiment, the position member 135 is configured with an improved height H1 to be 1.5times of x. In one implementation, the earlier height x is in the range of 0.8 to 2.2 millimeters. Further, in one implementation, the height H1 is in range of 0.7 to 0.9 times of a first air gap AG1 (shown in Fig. 5) provided between the peripheral surface Thus, the height H1 optimized to be 1.5 times x maintains desired distance as a higher distance would result in interference between the rotating member assembly and adjacent components. A second air gap AG2 (shown in Fig. 5) between the position member 135 and the sensor member 145 is configured in the range of 0.6 to 1 millimetre to enable seamless detection of the variation in reluctance.

As depicted in Fig. 5, which illustrates a schematic view enlarged view of a rotation member assembly, in accordance with an embodiment of the present subject matter, a first air gap AG1 between the missing member region 140/ peripheral surface 130 and the sensor member 145 is configured in the range of 1.8 to 6 millimetres thereby maintaining a safe distance from the sensor member 145 thereby not inducing any false pulses. The missing member region 140 and the peripheral surface 130 are analogous to each other in terms of gap between them and the sensor member 145. Thus, any undulations on the outer peripheral surface 130 of the rotating member do not influence any change in reluctance of the sensor member 145. Further, the sensor member 145 also does not require any changes. The existing sensor member 145 can be used. The mounting member 145M that is used to support the sensor member 145 on a structural member is adjusted in order to maintain or calibrate the gap AG2 between the sensor member 145 and the position member 135. The mounting member 145M can be adjusted to obtain the desired air gap.

Further, a ratio of 'the first air gap AG1 between the peripheral surface 130 and the sensor member 145' to 'the second air gap AG2 between the positioning member 135 and the sensor member 145' is configured in the range of 3 to 6, which configures the rotating member (which is rotating member 105) and the sensor member 145 to reduce or eliminate any noise voltage generation thereby eliminating any false pulse detection. Further, the air gap ratio (AG1/AG2) [herein after referred to as the `air gap ratio'] is configured to nullify any variations in the surface of the outer peripheral surface and even considering presence of any stray capacitance in the control unit'.

Further, the sensor member 145 is electrically connected to a control unit. The sensor member voltage signal comprises positive peak, zero crossing region and negative peak. The positive peak is detected based on the voltage threshold. If voltage threshold is higher than 0.8 V in the positive side and a zero crossing is observed, it is considered as one pulse. In the pip less region, signal voltage generated is less than the threshold value and zero output is obtained. With this information injection and ignition is decision is performed.

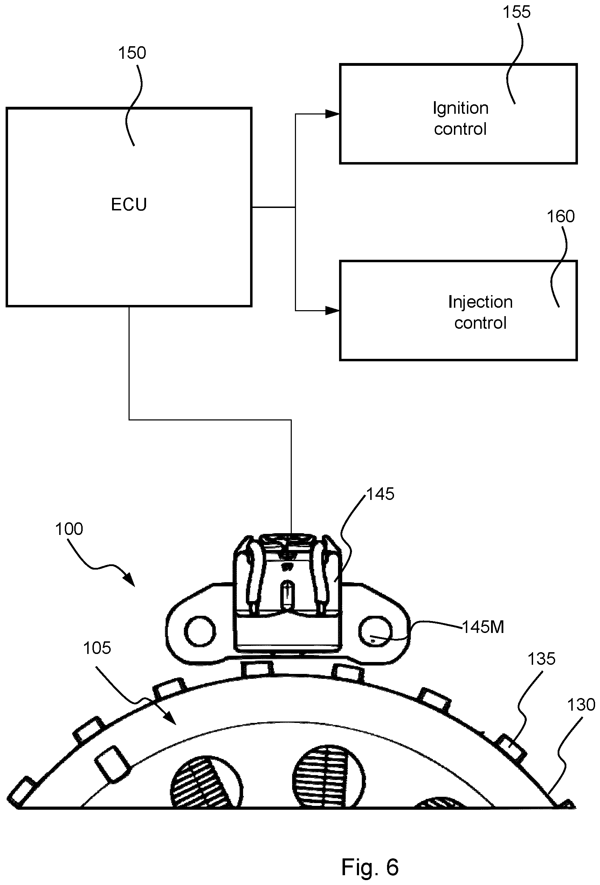

Fig. 6 illustrates a schematic view of rotation detection system, in accordance with an embodiment of the present subject matter. The sensor member 145 is electrically connected to a control unit 150. The present subject matter, that provides an air gap ratio AG1/AG2 (as explained in Fig. 5) maintained in the range of 3 to 6 enables using the control unit 150, which does not require a digital comparison or digital voltage setting circuitry. Voltage data from the sensor member 145 is fed to the control unit 150. The control unit 150 can effectively identify the position member 135 and the missing member region 140 even with a threshold voltage as low as around 0.8 volts. Thus, the rotation of the rotating member 105, even during kick-start operation that generates a low-voltage/ electro motive force (EMF) can be effectively identified by the control unit 150. Thus, the control unit 150 being fed with data from the sensor member 145 effectively identifies the crank angle, the rate of change of rotational speed from the data. Accordingly, the control unit 150 is configured to trigger an ignition control 155 for generation of spark and to trigger an injection control 160 (or similar fuel supply control) for injecting fuel pulses. Thus, the entire system operates in synchronization without any false detection or false actuation of systems.

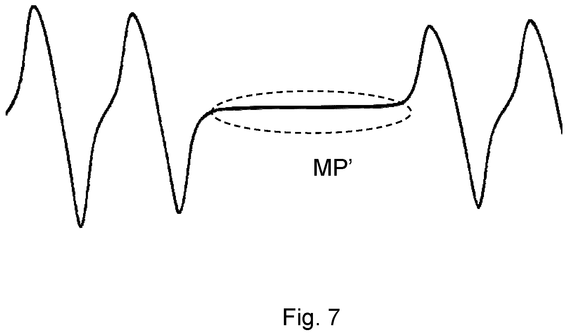

Fig. 7 illustrates an enlarged view of a pulse output of a sensor member, in accordance with an embodiment of the present subject matter. The sensor member 145 detects the position member 135 thereby creates pulses. When the missing member region 140 passes by the sensor member 145, the sensor member 145 is configured to generate a substantially flat curve. The flat curve represents the missing member region MP' (which is analogous to the peripheral surface) without any spikes due to the air gap ratio AG2/AG1 being in the range of 3 to 6 thereby identifying the correct position of the piston and correct crank angle eliminating any synchronization losses. Thus, when implemented in a motor vehicle, the user of the vehicle can confidently perform hill climb or over-taking without fear of any drop in speed and acceleration. Further, due to synchronized operation, occurrence of jerks is eliminated. Moreover, due to accurate data related to rotating member like crankshaft and corresponding crank angle, fuel injection pulses can be accurately delivered thereby saving fuel and reducing emissions.

It is to be understood that the aspects of the embodiments are not necessarily limited to the features described herein. Many modifications and variations of the present subject matter are possible in the light of above disclosure. Therefore, within the scope of claims of the present subject matter, the present disclosure may be practiced other than as specifically described.

### List of reference numerals:

- 100: rotation member assembly
- 102: electrical machine
- 105: rotating member
- 110: stator
- 111: securing means
- 115: closed axial side
- 120: aperture
- 130: peripheral surface
- 135: position member(s)
- 140: missing member region
- 145: sensor member
- 145M: mounting member
- 150: control unit
- 155: ignition control
- 160: injection control
- AG1: first air gap (position member)
- AG2: second air gap (peripheral surface)
- H1: height
- R1: radius (outer peripheral surface)

## Claims

1. A rotation member assembly (100) comprising:
a rotating member (105), said rotating member (105) comprising:
a plurality of position members (135) spacedly disposed on a peripheral surface (130) of said rotating member (105), said plurality of position members (135) projecting outwardly from said peripheral surface (130); and
a missing member region (140) disposed on said peripheral surface (130);
a sensor member (145), disposed at a pre-determined gap from said plurality of position members (135), said sensor member (145) configured to generate an output upon detection of each position member of said plurality of position members (135); and
**characterized by** a mounting member (145M) supporting said sensor member (145), said mounting member (145M) being adjustable to calibrate a second air gap (AG2) between said sensor member (145) and said position members (135), such that a ratio AG1/AG2 of a first air gap (AG1), which is between said peripheral surface (130) and said sensor member (145), to the second air gap (AG2), which is between said position members (135) and the sensor member (145), is configured in a range of 3 to 6;
wherein said plurality of position members (135) protrude outward and have a height (H1),
wherein said height (H1) of said plurality of position members (135), along with the calibration of said second air gap (AG2) by means of said mounting member (145M), aids the rotation member assembly (100) to seamless detection of the variance in reluctance.

2. The rotation member assembly (100) as claimed in claim 1, wherein said height (H1) is configured in a range of 1.26 to 5.4 millimetres.

3. The rotation member assembly (100) as claimed in claim 1, wherein said second air gap (AG2) is in the range of 0.6 to 1 millimetre.

4. The rotation member assembly (100) as claimed in claim 1, wherein said first air gap (AG1) is in the range of 1.8 to 6 millimetres.

5. The rotation member assembly (100) as claimed in claim 1, wherein said plurality of position members (135) are provided on an outer peripheral surface (130) of said rotating member (105), and said sensor member (145) is disposed exterior to said rotating member (105).

6. A power unit including a rotation member assembly (100) as claimed in claim 1, wherein said rotation member assembly (100) is mounted to the power unit, said rotating member (105) connected to a crankshaft of said power unit and a stator (110) working in conjunction with said rotating member (105) connected to a structural member of said power unit.

7. A power unit as claimed in claim 6, wherein said rotating member (105) and said stator (110) form an electrical machine (102) capable of performing at least one of a motor and a generator function.

8. A power unit including a rotation member assembly (100) as claimed in claim 1 and a control unit (150), wherein said sensor member (145) is connected to the control unit (150) and said control unit (150) is capable of actuating plurality of systems including an ignition control (155) and a fuel supply control.

9. A motor vehicle including a rotation member assembly (100) as claimed in any one of claims 1 to 5 and/or a power unit as claimed in any one of claims 6 to 7.

## Patentansprüche

1. Drehelement-Baugruppe (100) aufweisend:
ein Drehelement (105), wobei das Drehelement (105) aufweist:
eine Vielzahl von Positionselementen (135), die auf einer Umfangsfläche (130) des Drehelements (105) beabstandet angeordnet sind, wobei die Vielzahl von Positionselementen (135) von der Umfangsfläche (130) nach außen vorsteht; und
einen auf der Umfangsfläche (130) angeordneten Bereich fehlender Elemente (140);
ein Sensorelement (145), das in einem vorbestimmten Spalt zu der Vielzahl von Positionselementen (135) angeordnet ist, wobei das Sensorelement (145) dazu eingerichtet ist, bei Erkennung je eines Positionselements der Vielzahl von Positionselementen (135) ein Ausgangssignal zu erzeugen;
und **gekennzeichnet durch**
ein Befestigungselement (145M), das das Sensorelement (145) trägt, wobei das Befestigungselement (145M) zum Kalibrieren eines zweiten Luftspalts (AG2) zwischen dem Sensorelement (145) und den Positionselementen (135) einstellbar ist, so dass ein Verhältnis AG1/AG2 eines ersten Luftspalts (AG1), der sich zwischen der Umfangsfläche (130) und dem Sensorelement (145) befindet, zu dem zweiten Luftspalt (AG2), der sich zwischen den Positionselementen (135) und dem Sensorelement (145) befindet, in einem Bereich von 3 bis 6 konfiguriert ist;
wobei die Vielzahl von Positionselementen (135) nach außen vorstehen und eine Höhe (H1) haben,
wobei die Höhe (H1) der Vielzahl von Positionselementen (135) zusammen mit der Kalibrierung des zweiten Luftspalts (AG2) mithilfe des Befestigungselements (145M) die Drehelement-Baugruppe (100) bei der übergangslosen Erfassung der Reluktanz-Streuung unterstützt.

2. Drehelement-Baugruppe (100) nach Anspruch 1, wobei die Höhe (H1) in einem Bereich von 1,26 bis 5,4 mm konfiguriert ist.

3. Drehelement-Baugruppe (100) nach Anspruch 1, wobei der zweite Luftspalt (AG2) im Bereich von 0,6 bis 1 mm liegt.

4. Drehelement-Baugruppe (100) nach Anspruch 1, wobei der erste Luftspalt (AG1) im Bereich von 1,8 bis 6 mm liegt.

5. Drehelement-Baugruppe (100) nach Anspruch 1, wobei die Vielzahl von Positionselementen (135) auf einer äußeren Umfangsfläche (130) des Drehelements (105) vorgesehen sind und das Sensorelement (145) außerhalb des Drehelements (105) angeordnet ist.

6. Antriebseinheit mit einer Drehelement-Baugruppe (100) nach Anspruch 1, wobei die Drehelement-Baugruppe (100) an der Antriebseinheit angebracht ist, das Drehelement (105) mit einer Kurbelwelle der Antriebseinheit verbunden ist und ein Stator (110), der mit dem Drehelement (105) zusammenwirkt, mit einem Strukturelement der Antriebseinheit verbunden ist.

7. Antriebseinheit nach Anspruch 6, wobei das Drehelement (105) und der Stator (110) eine elektrische Maschine (102) bilden, die zumindest eine der Funktionen eines Motors und eines Generators ausführen kann.

8. Antriebseinheit mit einer Drehelement-Baugruppe (100) nach Anspruch 1 und einer Steuereinheit (150), wobei das Sensorelement (145) mit der Steuereinheit (150) verbunden ist und die Steuereinheit (150) dazu fähig ist, eine Vielzahl von Systemen einschließlich einer Zündsteuerung (155) und einer Kraftstoffzufuhrsteuerung zu betätigen.

9. Kraftfahrzeug mit einer Drehelement-Baugruppe (100) nach einem der Ansprüche 1 bis 5 und/oder einer Antriebseinheit nach einem der Ansprüche 6 bis 7.

## Revendications

1. Ensemble d'élément rotatif (100) comportant :
un élément rotatif (105), ledit élément rotatif (105) comportant :
une pluralité d'éléments de position (135) disposés de manière espacée sur une surface périphérique (130) dudit élément rotatif (105), ladite pluralité d'éléments de position (135) faisant saillie vers l'extérieur à partir de ladite surface périphérique (130) ; et
une région vierge d'élément (140) disposée sur ladite surface périphérique (130) ;
un élément capteur (145), disposé à un interstice prédéterminé de ladite pluralité d'éléments de position (135), ledit élément capteur (145) étant configuré pour générer une sortie lors de la détection de chaque élément de position de ladite pluralité d'éléments de position (135) ;
et **caractérisé par**
un élément de montage (145M) supportant ledit élément de capteur (145), ledit élément de montage (145M) étant réglable pour calibrer un second interstice (AG2) entre ledit élément de capteur (145) et lesdits éléments de position (135), tel qu'un rapport AG1/AG2 d'un premier interstice (AG1), qui est entre ladite surface périphérique (130) et ledit élément de capteur (145), au second interstice (AG2), qui est entre lesdits éléments de position (135) et l'élément de capteur (145), est configuré dans une plage de 3 à 6 ;
ladite pluralité d'éléments de position (135) faisant saillie vers l'extérieur et a une hauteur (H1),
ladite hauteur (H1) de ladite pluralité d'éléments de position (135), conjointement avec l'étalonnage dudit second interstice (AG2) au moyen dudit élément de montage (145M), aidant l'ensemble d'élément rotatif (100) à détecter uniformément la variance de la réluctance.

2. Ensemble d'élément rotatif (100) selon la revendication 1, dans lequel ladite hauteur (H1) est configurée dans une plage de 1,26 à 5,4 mm.

3. Ensemble d'élément rotatif (100) selon la revendication 1, dans lequel ledit second interstice (AG2) est compris entre 0,6 et 1 mm.

4. Ensemble d'élément rotatif (100) selon la revendication 1, dans lequel ledit premier interstice (AG1) est compris entre 1,8 et 6 mm.

5. Ensemble d'élément rotatif (100) selon la revendication 1, dans lequel ladite pluralité d'éléments de position (135) est fournie sur une surface périphérique extérieure (130) dudit élément rotatif (105), et ledit élément de capteur (145) est disposé à l'extérieur dudit élément rotatif (105).

6. Unité de puissance comprenant un ensemble d'élément rotatif (100) selon la revendication 1, dans laquelle ledit ensemble d'élément rotatif (100) est monté sur l'unité de puissance, ledit élément rotatif (105) étant relié à un vilebrequin de ladite unité de puissance et un stator (110) travaillant en conjonction avec ledit élément rotatif (105) étant relié à un élément structurel de ladite unité de puissance.

7. Unité de puissance selon la revendication 6, dans laquelle l'élément rotatif (105) et le stator (110) forment une machine électrique (102) capable de remplir au moins l'une des fonctions de moteur et de générateur.

8. Unité de puissance comprenant un ensemble d'élément rotatif (100) selon la revendication 1 et une unité de commande (150), dans laquelle ledit élément capteur (145) est connecté à l'unité de commande (150) et ladite unité de commande (150) est capable d'actionner plusieurs systèmes, y compris une commande d'allumage (155) et une commande d'alimentation en carburant.

9. Véhicule automobile comprenant un ensemble d'élément rotatif (100) selon l'une quelconque des revendications 1 à 5 et/ou une unité de puissance selon l'une quelconque des revendications 6 à 7.
